Europäisches Patentamt

(19) European Patent Office

Office européen des brevets

(11) Numéro de publication: **0 236 165**
**B1**

(12) **FASCICULE DE BREVET EUROPEEN**

(45) Date de publication du fascicule du brevet: 06.06.90

(51) Int. Cl.⁵: **B 26 D 3/28,** B 65 H 75/28, F 16 G 3/00

(21) Numéro de dépôt: 87400155.5

(22) Date de dépôt: 23.01.87

(54) Dispositif mécanique de décorticage d'un matériau composite et procédé de décorticage utilisant ce dispositif.

(30) Priorité: 24.01.86 FR 8601143

(43) Date de publication de la demande:
09.09.87 Bulletin 87/37

(45) Mention de la délivrance du brevet:
06.06.90 Bulletin 90/23

(84) Etats contractants désignés:
AT BE DE ES FR IT LU NL

(56) Documents cités:
DE-A-2 135 640
DE-A-2 219 576
DE-B-1 779 125
GB-A-1 051 676
GB-A-1 279 934
US-A-1 931 322
US-A-3 929 555

(73) Titulaire: Caoutchouc Manufacturé et Plastiques Société Anonyme dite:
143, rue Yves-le-Coz B.P. 554
F-78005 Versailles Cedex (FR)

(72) Inventeur: Jaubert, Claude
18, rue de la Meulonnière
F-92500 Rueil Malmaison (FR)

Courier Press, Leamington Spa, England.

## Description

L'invention concerne le domaine des matériaux composites souples constitués d'un élément de renforcement en textile synthétique ou en cables métalliques et d'un revêtement, sur au moins une face dudit renforcement réalisé par un matériau flexible tel que du caoutchouc ou du plastique lié au renforcement. Elle est relative à un dispositif mécanique permettant d'enlever la couche superficielle de revêtement sur une face (opération qui sera définie dans la suite du texte par le terme de "décorticage") et à enrouler ladite couche superficielle sans risque de glissement.

Ces opérations de décorticage sont réalisées lorsqu'il est nécessaire de procéder à une mise à nu de l'élément de renforcement par exemple pour jonctionner des sangles ou des courroies ou pour confectionner des articles à partir de tissus enduits.

Un dispositif de décorticage pour courroies transporteuses est décrit dans le document DE—A—1 779 125 de Continental Gummi. Il comporte un tube d'entraînement, constitué d'une entretoise et d'un tube fendu d'une rainure et des moyens de mise en rotation dudit tube. Destiné à la séparation des renforcements textiles et s'appliquant sur la largeur totale de la courroie, il nécessite une structure lourde pour résister aux efforts de traction exercés.

Diverses méthodes sont appliquées dans l'industrie des composites pour procéder à un décorticage et sont décrites dans les modes opératoires des fournisseurs de matériaux.

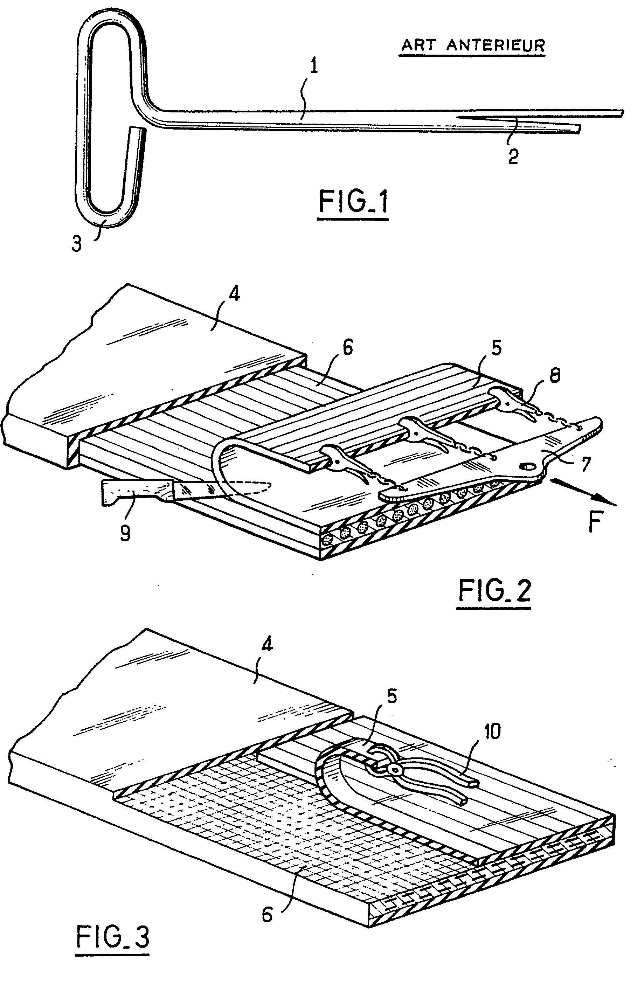

La plupart de ces techniques utilisent le principe de la "clé à sardines", dispositif constitué, comme le montre la figure 1, d'une tige 1 comportant une fente 2 dans laquelle est engagée l'extrémité du matériau à enlever.

L'enroulement est fait, manuellement, en tournant la tige par la poignée 3. Ce système a pour inconvénients majeurs la nécessité de réaliser une amorce assez longue et le risque de glissement de l'extrémité engagée dans la fente 2 de la tige. En outre, la largeur de la fente 2 doit être adaptée à l'épaisseur du matériau à enlever. D'autres procédés, plus ou moins manuels, sont décrits, par exemple dans les chapitres relatifs à la mise en sans fin des courroies transporteuses.

Les figures 2 et 3, extraites du mode opératoire de jonctionnement des bandes transporteuses de la Société Caoutchouc Manufacturé et Plastiques, illustrent les techniques utilisées aujourd'hui dans les ateliers ou sur les chantiers.

La figure 2 montre le "décorticage au palonnier" qui, pour enlever de la courroie transporteuse 4, le revêtement 5 et mettre ainsi à nu l'élément de renforcement 6, utilise un dispositif de traction 7 constitué d'une plaque métallique, pourvue de pinces 8, qui permet d'exercer la force de traction nécessaire F et un couteau de boucher 9 qui sépare le revêtement 5 de l'élément de renforcement 6. Cette technique de "décorticage au palonnier" requiert une main-d'oeuvre très qualifiée, en particulier lorsqu'elle est appliquée aux courroies transporteuses à renforcement textile, elle présente de nombreux risques de blessure de l'élément de renforcement et ne permet pas l'enroulement du revêtement.

La figure 3 montre une autre méthode, couramment utilisée pour les courroies transporteuses, le "décorticage à la tenaille ou à la pince à talon". Elle s'applique à des bandelettes de revêtement 5 de faible largeur que l'on détache, par arrachement, avec une tenaille 10 de la courroie transporteuse 4, pour mettre à nu l'élément de renforcement 6. Cette technique est longue à mettre en oeuvre, elle présente des risques de blessure de l'élément de renforcement 6 lors de la découpe des bandelettes et des risques de rupture du revêtement 5 par la pince ou la tenaille 10, elle nécessite de la part de l'opérateur un effort physique important, elle n'est plus praticable sur des matériaux composites dans lesquels la force d'adhérence entre le revêtement 5 et l'élément de renforcement 6 dépasse 10 daN/cm de largeur car l'effort que peut fournir l'utilisateur impliquerait des largeurs de bandelettes trop faibles pour ne pas casser; elle ne permet, pas plus que la précédente, l'enroulement du matériau.

D'autres méthodes telles que celles utilisant un rabot, une fraise ou un dispositif d'abrasion permettent d'éliminer le revêtement avec plus ou moins de dommage aux éléments de renforcement sous-jacents-, mais cette élimination se produit sous une forme qui ne permet pas la réutilisation -souvent nécessaire- du revêtement pour les opérations ultérieures.

L'analyse de l'art antérieur montre donc qu'un dispositif permettant le décorticage d'un matériau composite, sans risque pour l'élément de renforcement, nécessitant peu de force physique et de qualification particulière, de l'opérateur et applicable à des composites dont l'adhérence entre revêtement et élément de renforcement est élevée n'est pas connu.

L'invention a pour objectifs un procédé de "décorticage" utilisant un dispositif adéquat qui permettre de limiter les longueurs d'amorçage, d'exercer, par enroulement, une traction sur le matériau à décortiquer sans créer de contraintes localisées excessives, d'éviter l'emploi d'outillage lourd et onéreux tels que rabot ou fraise, d'éliminer tout effort humain excessif et de limiter le risque de blessure des éléments textiles ou métalliques, tout en permettant l'enroulement sans glissement du revêtement décortiqué.

L'invention concerne donc un dispositif permettant le décorcage et l'enroulement avec un minimum de longueur d'amorçage de tout matériau souple, apte à être enroulé, indépendamment de l'épaisseur du matériau, et le procédé de décorticage et d'enroulement utilisant ledit dispositif.

Le dispositif de décorticage et d'enroulement d'un matériau souple collé sur un autre matériau, démontable—donc portatif—comprenant un tube d'entraînement constitué d'un tube, fendu d'une rainure, et d'une entretoise et des moyens de mise en notation du tube est caractérisé en ce qu'il comprend un enrouleur monté libre en translation avec rotation limitée comportant sur la plus grande partie de sa longueur une fente longitudinale et muni d'une entretoise en forme d'équerre et deux volants d'extrémité et en ce que dans les moyeux desdits volants d'extrémité viennent s'insérer les extrémités du tube d'entraînement, la rainure et la fente servant à pincer l'amorce du revêtement par effet de coincement entre le bord du tube d'entraînement et l'entretoise de l'enrouleur.

Le dispositif de décorticage et d'enroulement est démontable ce qui le rend aisément transportable. L'enrouleur est monté, libre en translation avec possibilité de rotation limitée, sur le tube d'entraînement. Il peut coulisser le long dudit tube pour se placer à tout endroit de la largeur du matériau à décortiquer. A chacune des extrémités du tube d'enroulement muni de l'enrouleur est fixé un des volants dont le rôle est d'exercer une rotation sur le tube d'entraînement communiquée à l'enrouleur par l'intermédiaire de la bandelette soumise alors à une traction au niveau de son interface avec le matériau de renforcement.

Les détails et variantes de l'invention seront mieux compris à la lecture de la description et des figures dans lesquelles, après les figures 1, 2 et 3 illustrant l'art antérieur,

— la figure 4 montre les composants du dispositif démonté,

— la figure 5 détaille les positions relatives des composants pour la mise en place de l'amorce du revêtement.

— la figure 6 représenté, en coupe, le tube d'entraînement,

— la figure 7 est la coupe de l'enrouleur,

— la figure 8 schématise le principe de coincement de l'amorce,

— la figure 9 représente l'enroulement du revêtement,

— la figure 10 décrit l'ensemble du dispositif en fonctionnement.

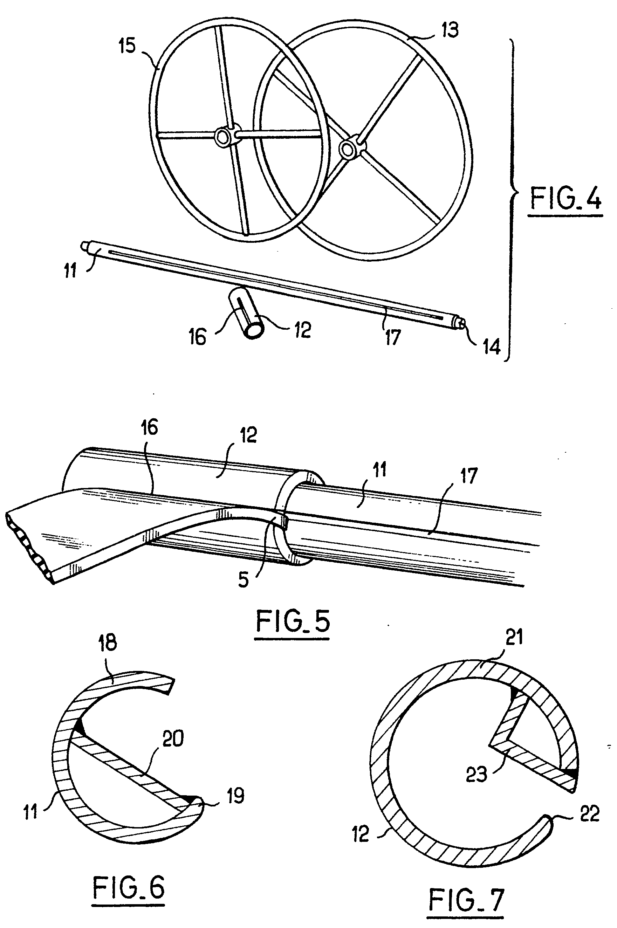

La figure 4 est une vue du dispositif démonté qui met en évidence sa simplicité. Le dispositif objet de l'invention n'est en effet constitué que de 4 pièces fonctionnelles:

— un tube d'entraînement 11

— un enrouleur 12

— deux volants 13

Le tube d'entraînement 11 peut être constitué de plusieurs manières: soit il est de longueur fixe, ce qui permet le décorticage de matériaux ayant une largeur inférieure ou égale à la longueur dudit tube d'entraînement, soit il est de longueur variable en utilisant des tronçons emboîtables ou en le réalisant de façon à ce qu'il soit télescopique, par un procédé bien connu par ailleurs, ce qui lui permet, tout en restant transportable, de s'adapter à toutes les largeurs de bandes. Les extrémités 14 du tube d'entraînement 11 présentent une forme appropriée pour s'engager dans le moyen 15 de chacun des volants 13 afin que lesdits volants puissent mettre en rotation le tube d'entraînement 11. L'enrouleur 12 qui présentent sur une grande partie de sa longueur une fente longitudinale 16 est monté co-axialement sur le tube d'entraînement 11 sur lequel il coulisse librement pour venir pincer n'importe quelle bande pré-amorcée de revêtement.

La figure 5 montre la position relative du tube d'entraînement 11 qui présente une rainure longitudinale 17 et de l'enrouleur fendu 12 monté co-axialement. Pour engager l'amorce du matériau à décortiquer, la fente 16 de l'enrouleur 12 est placée en vis à vis de la rainure longitudinale 17 du tube d'entraînement 11. L'extrémité du revêtement 5 est alors engagée dans l'espace ainsi créé. Par rotation du tube d'entraînement 11 il y aura coincement de l'extrémité du revêtement 5.

La figure 6 est une vue en coupe d'une réalisation particulière du tube d'entraînement 11, dont la section est une portion de couronne 18 d'angle au centre voisin de 270°, dont l'extrémité 19 est arrondie afin de ne pas blesser la face externe de l'amorce du revêtement sur laquelle elle vient s'appliquer. Une entretoise 20 est soudée sur la couronne 18 pour accroître sa résistance.

La figure 7 est une vue en coupe d'une réalisation particulière de l'enrouleur 12, dont la section est une portion de couronne 21 d'angle au centre voisin de 340°, dont l'extrémité 22 est arrondie afin de ne pas blesser la face externe de l'amorce du revêtement sur laquelle elle vient s'appliquer. Une entretoise 23, en forme d'équerre est soudée à partir de l'extrémité opposée au bord 22. Elle est destinée à permettre l'appui de la face interne du revêtement en cours de l'enroulement.

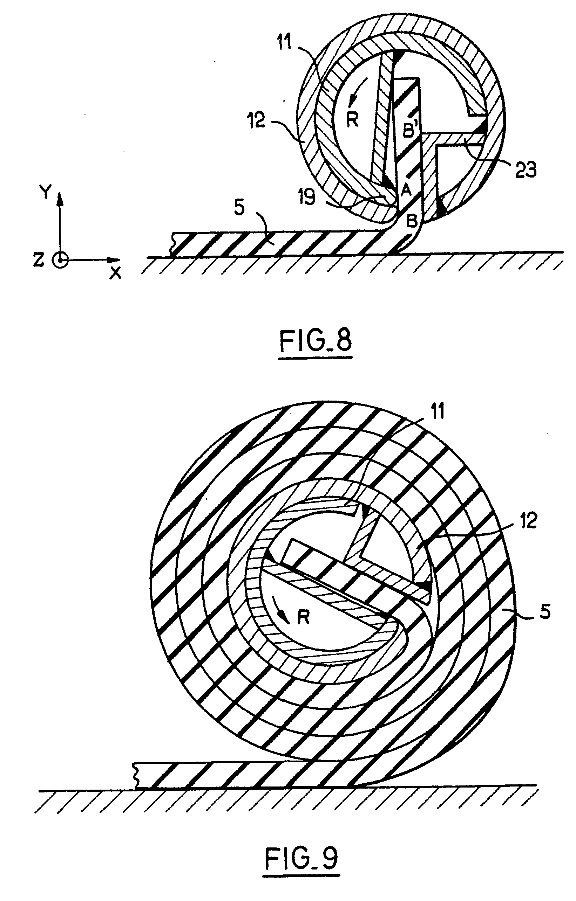

La figure 8 schématise, en coupe, le principe de coincement de l'amorce du revêtement 5 entre le tube d'entraînement 11 et l'enrouleur 12, sous l'effet de la force de rotation R, le tube d'entraînement 11 étant libre en rotation autour de l'axe z orthogonal au plan xy de section dudit tube d'entraînement 11 par rapport à l'enrouleur 12. Le couple appliqué sur les volants est transmis au tube d'entraînement 11 qui vient appuyer, dans la zone A sur la face supérieure du revêtement 5 et oblige la face inférieure dudit revêtement 5 à prendre appui contre l'entretoise en forme d'équerre 23 de l'enrouleur 12 sur la longueur BB' développant ainsi des forces antagonistes qui provoquent entre l'entretoise 23 de l'enrouleur 12 et l'extrémité 19 du tube d'entraînement 11, un effet de coincement de l'amorce du revêtement 5.

La figure 9 montre, en coupe, l'ensemble du tube d'entraînement 11 et de l'enrouleur 12, en cours d'opération, lorsqu'une quantité importante de revêtement a été enlevée et enroulée, sous l'effet de la force R.

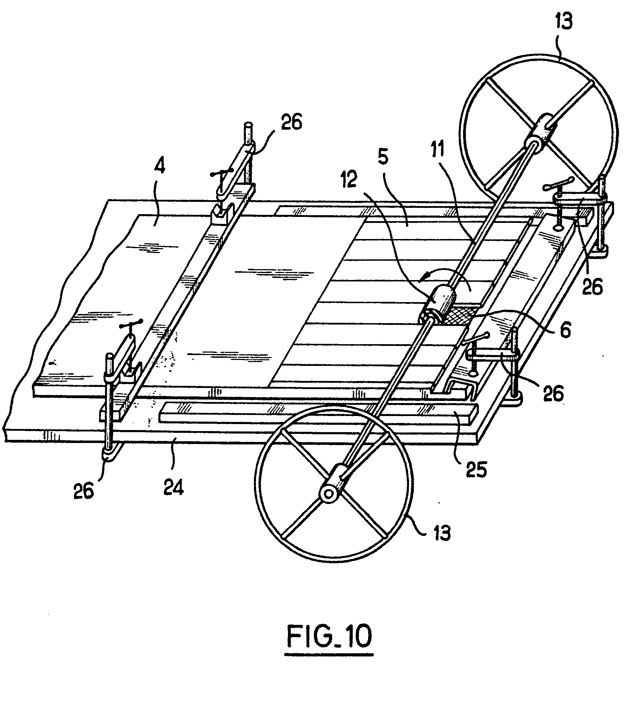

La figure 10 illustre l'ensemble du procédé de décorticage; le composite 4 est placé sur une table ou un établi de travail 24, avec éventuellement des cales de guidage 25, et fixé à l'aide de serre-joint 26. Après élimination éventuelle des bords latéraux et de l'extrémité du composite, le revêtement 5 est découpé, jusqu'à la profondeur des éléments de renforcement 6, en bandes destinées à être enlevées par le dispositif de décorticage et d'enroulement objet de l'invention. Après amorçage sur une faible distance, l'amorce du revêtement est introduite dans l'ensemble tube d'entraînement 11 dérouleur 12. Un couple de rotation est alors exercé sur les volants 13 débordants de la table de travail 24 volants qui entraînent le tube 11 grâce à la force R.

Comme le montre la description précédente, le dispositif objet de l'invention offre de nombreux avantages par rapport aux solutions connues jusqu'alors:

— il est très simple à réaliser donc peu coûteux,

— il ne nécessite aucune qualification particulière de la main—d'oeuvre,

— il requiert peu de force physique de la part de l'opérateur,

— il est adapté à toutes les épaisseurs usuelles de revêtement grâce à la technique de coincement de l'amorce,

— il est adaptable à toutes les largeurs de composites grâce au système télescopique ou au système d'emboîtage de tronçons du tube d'entraînement,

— il est léger et démontable, donc facilement transportable sur un chantier,

— grâce à l'effet de coincement, il ne nécessite qu'une faible longueur d'amorce,

— il développe une force suffisante pour décoller les revêtements des composites même très adhérents aux éléments de renforcement.

Le dispositif de décorticage dont l'application principale est destinée aux composites et plus particulièrement aux courroies transporteuses peut également être appliqué sur les tuyaux et cables pour les dénuder partiellement, sur des nappes textiles collées l'une à l'autre et que l'on désire séparer et, plus généralement dans toute opération consistant à séparer deux matériaux dont l'un au moins présente une souplesse suffisante pour être enroulé.

## Revendications

1. Dispositif de décorticage et d'enroulement d'un matériau souple collé sur un autre matériau, démontable—donc portatif—comprenant un tube d'entraînement (11) constitué d'un tube, fendu d'une rainure (17), et d'une entretoise (20) et des moyens de mise en rotation du tube caractérisé en ce qu'il comprend un enrouleur (12) monté libre en translation avec rotation limitée comportant sur la plus grande partie de sa longueur une fente longitudinale (16) et muni d'une entretoise en forme d'équerre (23) et deux volants d'extrémité (13), et, en ce que dans les moyeux (15) desdits volants d'extrémité (13) viennent s'insérer les extrémités (14) du tube d'entraînement (11), la rainure (17) et la fente (16) servant à pincer l'amorce du revêtement (5) par effet de coincement entre le bord (19) du tube d'entraînement (11) et l'entretoise (23) de l'enrouleur (12).

2. Dispositif de décorticage et d'enroulement d'un matériau souple selon la revendication 1, caractérisé en ce que le tube d'entraînement (11) a une longueur fixe, légèrement supérieure à la largeur du composite à décortiquer.

3. Dispositif de décorticage et d'enroulement d'un matériau souple selon la revendication 1, caractérisé en ce que le tube d'entraînement (11) est constitué de tronçons emboitables qui permettent d'adapter sa longueur à la largeur du matériau à décortiquer.

4. Dispositif de décorticage et d'enroulement d'un matériau souple selon la revendication 1, caractérisé en ce que le tube d'entraînement (11) est télescopique ce qui permet d'adapter sa longueur à la largeur du matériau à décortiquer.

5. Dispositif de décorticage et d'enroulement d'un matériau souple selon l'une des revendications 1 à 4, caractérisé en ce que la section du tube d'entraînement (11) est une portion de couronne d'angle au centre voisin de 270°.

6. Dispositif de décorticage et d'enroulement d'un matériau souple selon l'une des revendications 1 à 5, caractérisé en ce que l'enrouleur (12) à pour section une portion de couronne d'angle au centre voisin de 340°.

## Patentansprüche

1. Vorrichtung zum Ablösen und Aufrollen eines auf ein anderes Material aufgeklebten biegsamen Materials, die auseinandernehmbar und somit transportabel ist und ein Antriebsrohr (11) in Form eines mit einem Schlitz (17) und einer Querstrebe (20) versehenen Schlitzrohres und Mittel zum Verdrehen des Rohres umfaßt, dadurch gekennzeichnet, daß ein Aufwickler (12) vorgesehen ist, der translatorisch frei, aber nur begrenzt drehbar auf dem Antriebsrohr montiert ist und einen sich über den größten Teil seiner Länge erstreckenden Längsschlitz (16) und eine Querstrebe in Form eines Winkels (23) aufweist, und zwei endständige Handräder (13) sowie dadurch, daß daß in die Naben (15) dieser endständigen Handräder (13) die Enden (14) des Antriebsrohres (11) einsetzbar sind, wobei dessen Schlitz (17) und der Längsschlitz (16) des Anfangsteil der Hüllschicht (5) zwischen dem Rand (19) des Antriebsrohres (11) und der Querstrebe (23) des Aufwicklers (12) durch Verklemmen festlegen.

2. Vorrichtung zum Ablösen und Aufrollen eines biegsamen Materials nach Anspruch 1, dadurch gekennzeichnet, daß das Antriebsrohr (11) eine bestimmte Länge hat, die etwas größer ist als die Breite des zu bearbeitenden Verbundmaterials.

3. Vorrichtung zum Ablösen und Aufrollen eines biegsamen Materials nach Anspruch 1, dadurch gekennzeichnet, daß das Antriebsrohr (11) aus zusammensteckbaren Abschnitten besteht, mit deren Hilfe seine Länge an die Breite des zu bearbeitenden Verbundmaterials anpaßbar ist.

4. Vorrichtung zum Ablösen und Aufrollen eines biegsamen Materials nach Anspruch 1, dadurch gekennzeichnet, daß das Antriebsrohr (11) teleskopisch zusammenschiebbar und so in der Länge an die Breite des abzulösenden Materials anpaßbar ist.

5. Vorrichtung zum Ablösen und Aufrollen eines biegsamen Materials nach einem der Ansprüche 1 bis 4, dadurch gekennzeichnet, daß das Antriebsrohr (11) im Querschnitt einen Teil eines Kreisbogens mit einem Zentriwinkel von 270° bildet.

6. Vorrichtung zum Ablösen und Aufrollen eines biegsamen Materials nach einem der Ansprüche 1 bis 5, dadurch gekennzeichnet, daß der Aufwickler (12) im Querschnitt einen Teil eines Kreisbogens mit einem Zentriwinkel von 340° bildet.

**Claims**

1. A device for stripping and rolling up a flexible material bonded on to another material, which can be dismantled and is therefore portable, comprising a pulling tube (11) constituted by a tube slit by a groove (17) and by a brace (20), means (27) for setting the tube in rotation and two end-mounted fly wheels (13) characterised in that it comprises a winder (12), mounted for free translational displacement with limited rotation, comprising a longitudinal slit (16) extending over the greater part of its length and provided with a brace (23) in the form of an angle piece and in that into the hubs (15) of the said end-mounted fly wheels (13) are inserted the ends (14) of the pulling-tube (11), the groove (17) and the slit (16) serving to grip the free end of the covering (5) by a pinching action between the edge (19) of the pulling tube (11) and the brace (23) of the winder (12).

2. A device for stripping and rolling up a flexible material according to claim 1, characterised in that the pulling tube (11) has a fixed length slightly greater than the width of the composite material to be stripped.

3. A device for stripping and rolling up a flexible material according to claim 1, characterised in that the pulling tube (11) is made up of insertible sections which allow its length to be adapted to the width of the material to be stripped.

4. A device for stripping and rolling up a flexible material according to claim 1, characterised in that the pulling tube (11) is telescopic, which allows its length to be adapted to the width of the material to be stripped.

5. A device for stripping and rolling up a flexible material according to one of claims 1 to 4, characterised in that the cross-section of the pulling tube (11) is a sector of a circle with a centre angle of about 270°.

6. A device for stripping and rolling up a flexible material according to one of claims 1 to 5, characterised in that the winder (12) has as its cross-section a sector of a circle with a centre angle of about 340°.

EP 0 236 165 B1

ART ANTERIEUR

FIG_1

FIG_2

FIG_3

FIG.4

FIG.5

FIG.6

FIG.7

FIG.8

FIG.9

FIG. 10

4